# FASCICULE DE BREVET EUROPEEN

(11) **EP 0 722 063 B1**
(45) Date de publication et mention de la délivrance du brevet: **15.11.2000**
(21) Numéro de dépôt: 96420020.8
(22) Date de dépôt: 15.01.1996
(51) Int. Cl.: F16L 37/42, F16L 37/084

(54) **Raccord rapide de sécurité pour la jonction amovible de canalisations**
Sicherheitsschnellkupplung für lösbare Verbindung von Rohrleitungen
Quick acting safety coupling for the disconnectable connection of pipe lines

(30) Priorité: 16.01.1995 FR 9500612
(43) Date de publication de la demande: 17.07.1996
(73) Titulaire: STAUBLI FAVERGES, 74210 Faverges (FR)
(72) Inventeur: Lacroix, Jean-Jacques, F-74330 Poisy (FR); Laporte, Christophe, F-74210 Doussard (FR)
(74) Mandataire: Myon, Gérard Jean-Pierre

(56) Documents cités:
- DE-A- 2 741 512
- US-A- 3 873 062
- US-A- 4 483 510
- US-A- 5 290 009

## Description

La présente invention a trait aux raccords rapides utilisés pour la jonction amovible de canalisations, du genre comprenant deux éléments mâle et femelle propres à s'emmancher et à se verrouiller l'un à l'intérieur de l'autre en provoquant l'ouverture automatique d'un clapet chargé monté dans l'élément femelle relié à la source du fluide sous pression qui traverse le dispositif.

On a proposé différents types de mécanismes pour le verrouillage automatique des deux éléments emmanchés. Dans le Brevet U.S. N°3 873 062 (JOHNSON), ce mécanisme est formé par une bague qui comprend un anneau dont l'ouverture est orientée axialement par rapport au corps de l'élément femelle et qui est solidaire de griffes longitudinales profilées de manière à venir, sous l'effet de moyens élastiques associés à ladite bague, s'engager par leur extrémité libre dans une dépression annulaire prévue dans l'embout de l'élément mâle, lequel est ainsi retenu axialement. Cette bague de verrouillage est liée axialement à un fourreau coulissant de manoeuvre qui enveloppe ladite bague et le corps de l'élément femelle, de sorte que le déplacement axial de ce fourreau par l'opérateur provoque, à l'encontre des moyens élastiques précités, le recul de la bague et le retrait de ses griffes hors de la dépression de l'élément mâle qui peut ainsi être retiré de l'élément femelle.

Un tel système fonctionne de manière satisfaisante pour des pressions de fluide relativement modérées. Par contre, dans les cas où la pression du fluide véhiculé par les canalisations à relier dépasse une certaine valeur, lors de la manoeuvre axiale du fourreau en vue du désaccouplement, le fluide sous pression enclos dans la canalisation aval liée à l'élément mâle provoque, par appui de ce fluide contre le clapet fermé, l'expulsion brutale de cet élément hors de l'élément femelle. La violence de cette expulsion est telle qu'elle risque de causer des blessures à l'opérateur.

C'est à cet inconvénient qu'entend remédier la présente invention, laquelle a pour objet le raccord rapide de sécurité défini à la revendication 1 et aux revendications 2 et 3.

En fait l'invention consiste essentiellement à doter l'élément femelle d'un organe annulaire de sécurité à griffes qui, intervenant après une première manoeuvre exercée dans un sens sur le fourreau, immobilise axialement l'élément mâle à une position intermédiaire pour laquelle le clapet chargé est fermé et le fluide enclos dans la canalisation aval associée à l'élément mâle peut s'échapper à l'extérieur, tandis qu'une seconde manoeuvre axiale exercée sur le fourreau en sens inverse du précédent assure la commande de l'organe annulaire de sécurité et la libération totale de l'élément mâle.

On obtient de la sorte un fonctionnement analogue à celui des raccords rapides à verrou mobile transversalement qui sont du type dit "à double détente" (cf DE-A. 2741512 Schildmann), tout en conservant les avantages structurels spécifiques aux raccords rapides du type à griffes.

Le dessin annexé, donné à titre d'exemple, permettra de mieux comprendre l'invention, les caractéristiques qu'elle présente et les avantages qu' elle est susceptible de procurer :

Fig. 1 est une coupe axiale d'un raccord rapide établi conformément à l'invention, représenté à la position accouplée de ses deux éléments.

Fig. 2 est une vue en perspective montrant à l'état séparé le corps de l'élément mâle et les deux bagues à griffes qui lui sont associées.

Fig. 3 illustre l'agencement des deux pièces qui, une fois assemblées l'une à l'autre, forment le fourreau extérieur de manoeuvre du raccord.

Fig. 4 est une coupe transversale du raccord suivant le plan de coupe indiqué en IV-IV en fig. 1 ; le plan de coupe de fig. 1 a été rappelé en I-I.

Fig. 5 est une coupe axiale suivant le plan indiqué en V-V en fig. 4.

Fig. 6 est la coupe transversale correspondant au plan VI-VI de fig. 5.

Fig. 7, 8 et 9 sont des coupes axiales à plus petite échelle similaires à celle suivant fig. 1, montrant la position des pièces du raccord à trois phases successives du processus de désaccouplement.

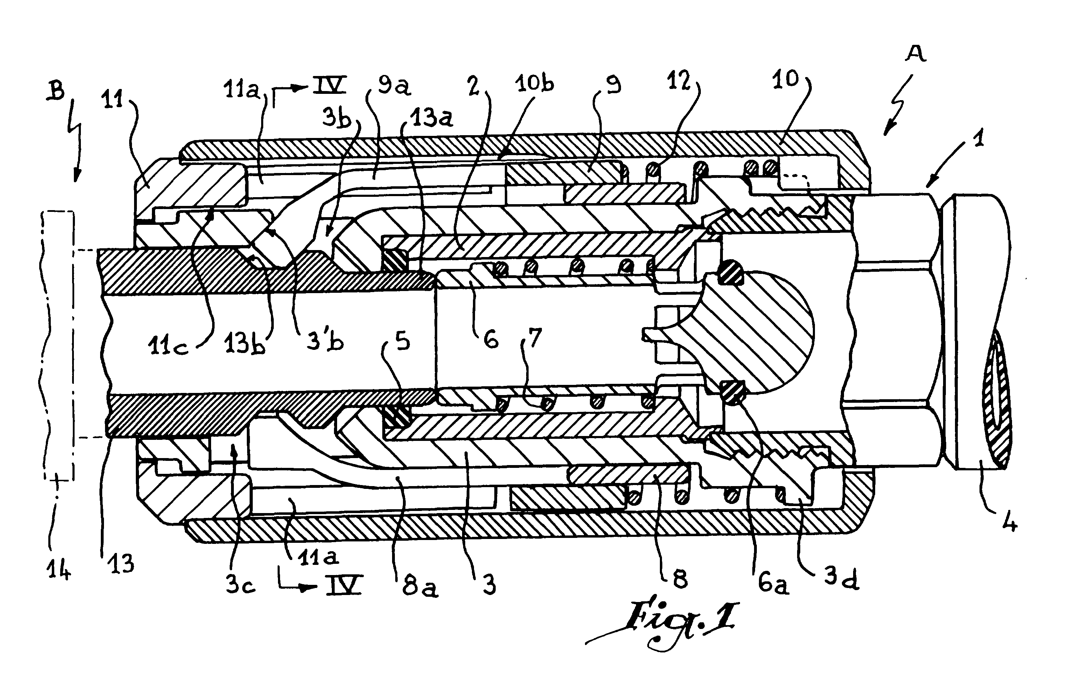

L'élément femelle A du raccord rapide représenté en fig. 1 comprend un corps tubulaire formé par l'assemblage de trois pièces cylindriques creuses 1, 2 et 3. La pièce arrière 1 est profilée pour permettre l'adaptation de l'extrémité de la canalisation amont 4 reliée à la source de fluide sous pression, tandis que la pièce intérieure 2, équipée d'un joint torique 5, présente à son extrémité tournée en direction de ladite pièce 1, un profil évasé propre à définir un siège pour le joint 6a porté par la tête d'un clapet tubulaire 6 associé à un ressort 7. On observera qu'on peut adopter la solution inverse, à savoir monter le joint sur le siège évasé.

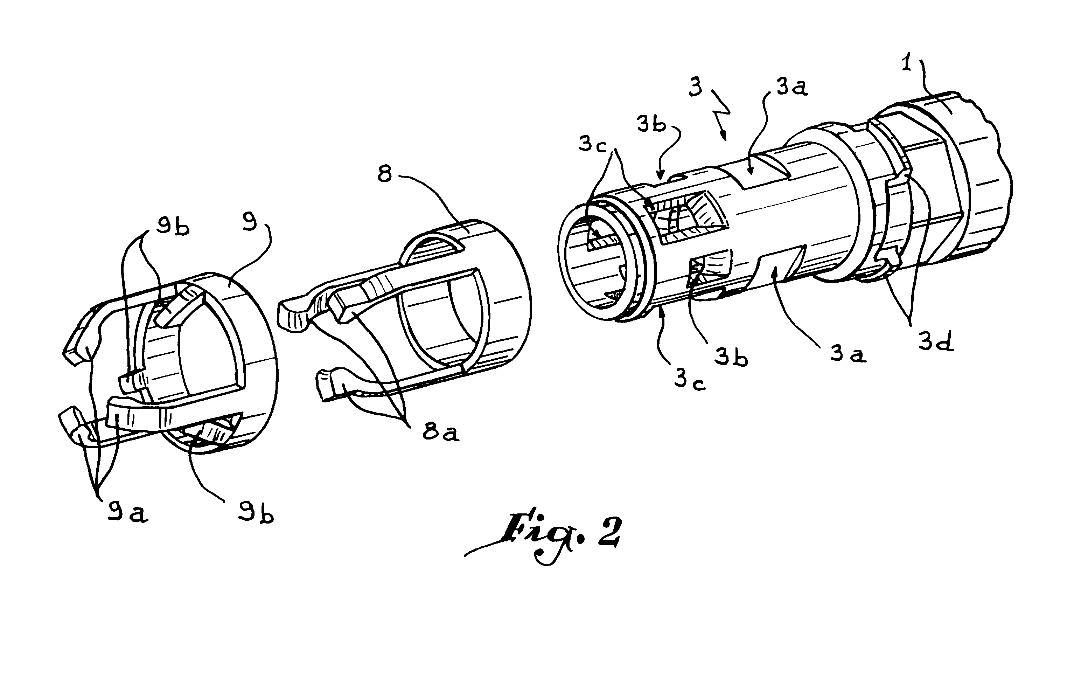

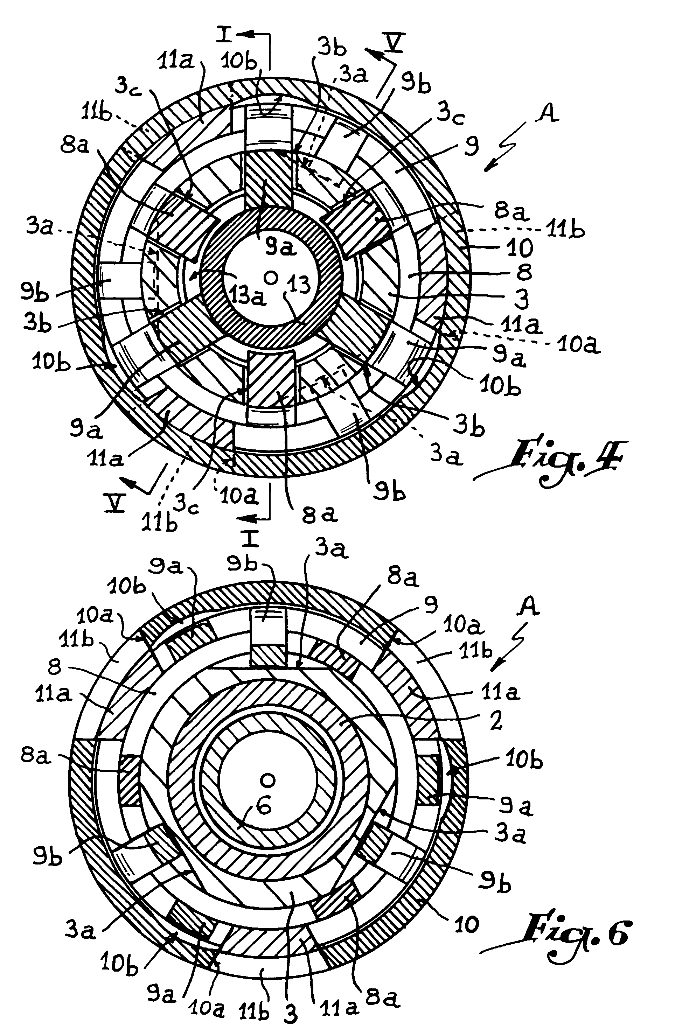

Comme montré en fig. 2, la pièce principale 3 de ce corps 1-2-3 comporte trois méplats longitudinaux 3a disposés suivant un même plan transversal. En avant de ces méplats 3a, la paroi est percée de deux séries de trois lumières respectivement référencées 3b et 3c, les lumières 3c s'étendant sur une plus grande longueur axiale que les lumières 3b. Comme on peut le voir en fig. 4 et 6, les trois méplats 3a, les trois lumières 3b et les trois lumières 3c sont mutuellement orientées à 120° dans chaque série.

Sur la pièce principale 3 du corps 1-2-3 est engagée à coulissement une bague de sécurité 8 pourvue de trois griffes longitudinales 8a tournées vers l'avant. Ces griffes 8a sont introduites dans les lumières longues 3c de la pièce 3 de façon à faire saillie par leur extrémité libre dans l'alésage intérieur de ladite pièce.

Sur la bague de sécurité 8 coulisse une bague de verrouillage 9 à plus grand diamètre. Cette bague 9 comporte de la même manière trois griffes antérieures 9a engagées dans les lumières courtes 3b de la pièce 3. Il convient d'observer que la bague 9 est également solidaire de trois dents 9b qui s'étendent vers l'avant au droit des griffes 9a, l'extrémité de chaque dent 9b venant s'appliquer sur un méplat 3a du corps.

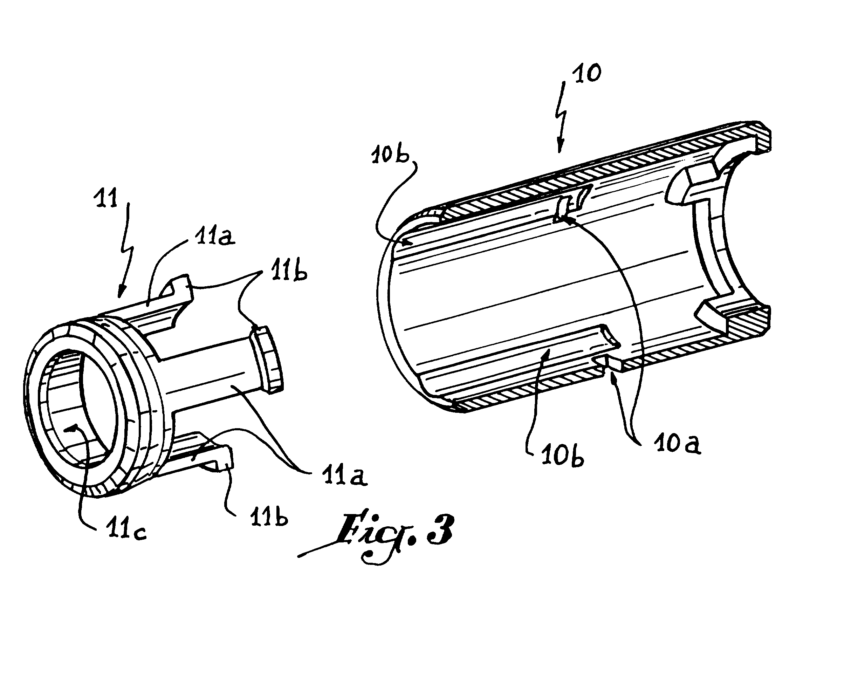

Le raccord comprend également un fourreau de manoeuvre qui, comme illustré à la fig. 3, est constitué par un manchon 10 et une douille antérieure 11. Cette dernière est pourvue de trois prolongements longitudinaux 11a qui s'étendent vers l'arrière et dont l'extrémité libre présente un talon 11b tourné vers l'extérieur, de façon à venir se clipser élastiquement dans l'une de trois fenêtres 10a prévues à cet effet dans le manchon 10, en assurant de la sorte la solidarisation réciproque des pièces 10 et 11 du fourreau, et ce aussi bien dans le sens axial qu'en rotation.

A la bague de verrouillage 9 est associé un ressort 12 qui prend appui contre des butées 3d de la pièce 3 pour repousser vers l'avant ladite bague 9 et engager élastiquement les griffes 9a de celle-ci à l'intérieur des lumières 3b. On observera que les griffes 8a et 9a, les dents 9b et les prolongements longitudinaux 11a s'emboîtent les uns entre les autres en assurant le guidage des bagues 8 et 9 dans le sens axial, en combinaison avec les lumières 3b et 3c, comme cela ressort des coupes transversales suivant fig. 4 et 6.

A l'élément femelle A ainsi constitué est associé un élément mâle B de type classique. Cet élément mâle B est formé par une pièce cylindrique tubulaire 13 dont une extrémité est assujettie à la canalisation 14 à raccorder à la canalisation 4 liée à l'élément femelle A, tandis que l'extrémité opposée se présente sous la forme d'un embout 13a apte à être introduit dans le débouché antérieur de la pièce 3 du corps 1-2-3. Sur cette pièce 13 est ménagée une dépression annulaire 13b prévue immédiatement en arrière de l'embout terminal 13a.

Pour exposer le fonctionnement du raccord décrit ci-dessus, on partira de la position de raccordement illustrée en fig. 1. Pour parvenir à cette position, l'opérateur a engagé l'embout 13a dans le corps 1-2-3 et a rapproché axialement les deux éléments A et B, ce qui a eu pour effets d'une part de repousser le clapet 6 jusqu'en position ouverte, d'autre part d'ouvrir les extrémités des griffes 9a de la bague de verrouillage 9, lesdites extrémités venant finalement s'appliquer dans la dépression 13b sous l'effet du ressort 12 associé à la bague précitée. Les deux éléments A et B sont verrouillés l'un à l'autre, le joint 5 assurant l'étanchéité du raccordement.

On observera que les griffes 9a ne peuvent s'ouvrir pour libérer la pièce 13 par suite du profil oblique du bord antérieur (référencé 3'b en fig. 1) des lumières courtes 3b. Au contraire, les extrémités des griffes 8a de la bague de sécurité 8, bien qu'engagées également dans la dépression 13b, ne sont pas maintenues et peuvent en conséquence s'écarter, de sorte qu'elles n'assurent aucune retenue.

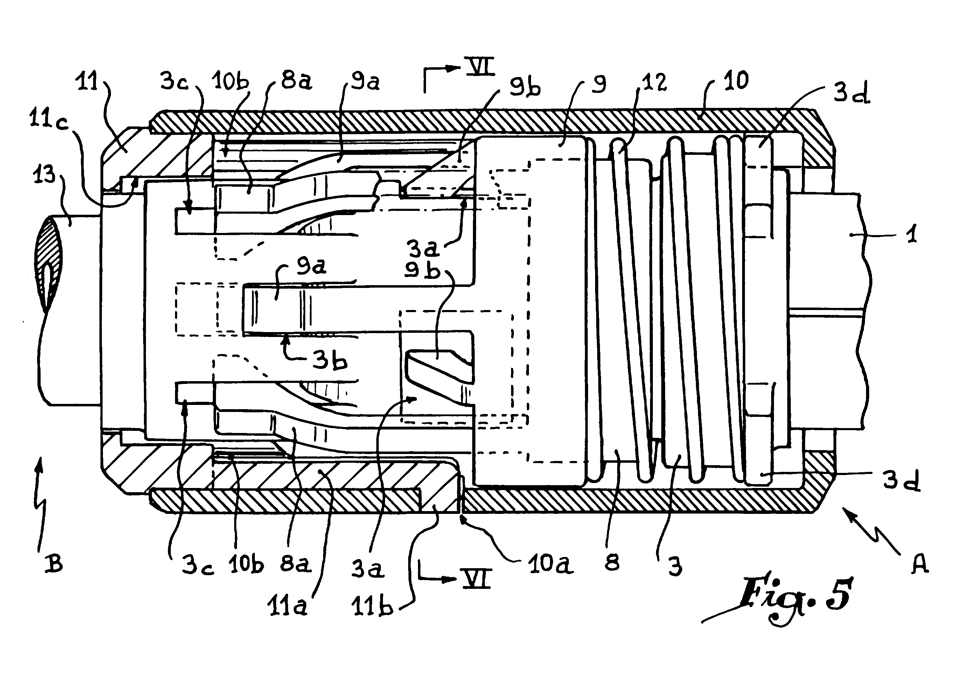

Pour dissocier les deux éléments A et B, l'opérateur doit en premier lieu déplacer axialement le fourreau de manoeuvre 10-11 vers l'arrière, c'est-à-dire suivant la flèche F1 de fig. 7. Les prolongements 11a de la douille 11 prennent appui contre la bague 9 qui recule à l'encontre du ressort 12, si bien que les extrémités des griffes 9a sont extraites de la dépression 13b et libèrent la pièce 13, laquelle se déplace vers l'avant sous l'effet du ressort 7 associé au clapet 6 qui tend a repousser ainsi l'embout 13a. Par ailleurs les extrémités des griffes 8a de la bague de sécurité 8 sont recouvertes par l'alésage axial 11c de la douille 11 et sont en conséquence maintenues appliquées dans la dépression 13b.

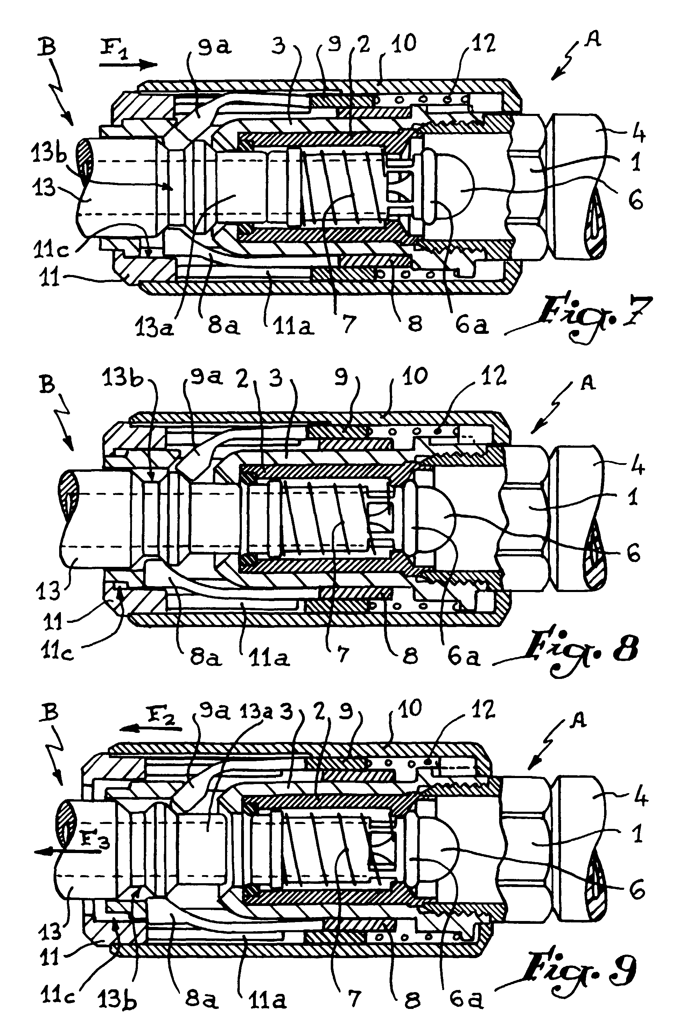

On arrive ainsi à la position intermédiaire illustrée en fig. 8 pour laquelle le clapet 6 est fermé, tandis que la pièce 13 de l'élément mâle B est retenue axialement par les griffes 8a et ne peut donc être dissociée de l'élément femelle A. On notera qu'à cette position intermédiaire, le fluide sous pression enclos dans la canalisation 14 s'échappe à l'extérieur à travers les jeux existant entre les pièces de l'élément femelle A et à travers des rainures longitudinales 10b pratiquées à cet effet dans la paroi intérieure du manchon 10. Il y a ainsi décompression de la canalisation 14 et de la pièce 13 qui forme l'élément mâle B.

Pour dégager celui-ci hors de l'élément femelle A, l'opérateur doit agir à nouveau sur le fourreau 10-11 en le déplaçant axialement vers l'avant, suivant la flèche F2 de fig. 9. Le déplacement axial du fourreau 10-11 a pour effet que les extrémités des griffes 8a de la bague de sécurité 8 ne sont plus engagées dans l'alésage 11c et sont en conséquence libres de s'ouvrir radialement pour sortir de la dépression 13b lorsque l'opérateur exerce une traction sur l'élément mâle B (flèche F3 de fig. 9). La décompression exercée à la position intermédiaire suivant fig. 8 évite tout risque d'expulsion brusque.

Une fois l'élment mâle B complètement extrait du raccord femelle A, le ressort 12 ramène la bague 9 à la position d'attente. On notera que le déplacement axial de la bague 9 est limité par butée des dents 9b de cette bague contre le bord antérieur des méplats 3a, ce qui élimine tout risque de blocage intempestif. Le raccord est ainsi prêt pour une nouvelle opération de raccordement.

Il va de soi que le nombre des griffes 8a et 9a peut varier dans une large mesure, en fonction notamment du diamètre des raccords à réaliser. Il convient en outre de noter qu'à l'exeption évidemment des ressorts 7 et 12, la quasi totalité des pièces constitutives du raccord rapide suivant l'invention est susceptible d'être aisément réalisée en matière plastique moulée, ce qui abaisse sensiblement le poids du dispositif et son coût de fabrication. Le montage des différentes pièces peut être effectué à l'aide de robots ou manipulateurs, sans difficulté particulière.

## Revendications

1. Raccord rapide de sécurité pour la jonction amovible de canalisations, du genre dans lequel le mécanisme de verrouillage qui immobilise axialement l'élément mâle (B) une fois que l'emmanchement de celui-ci dans l'élément femelle (A) a provoqué l'ouverture du clapet chargé (6) monté dans cet élément femelle (A) comprend d'une part un organe annulaire (9) pourvu de griffes longitudinales (9a) aptes à venir s'engager, sous l'effet de moyens élastiques (12), dans une dépression annulaire (13b) du corps (13) de l'élément mâle, d'autre part un fourreau de manoeuvre (10-11) dont le déplacement axial provoque l'extraction desdites griffes hors de la dépression et la libération de l'élément mâle, caractérisé en ce que l'élément femelle renferme en outre un organe annulaire de sécurité à griffes longitudinales (8-8a) qui, intervenant après une première manoeuvre axiale exercée sur le fourreau, immobilise l'élément mâle à une position intermédiaire pour laquelle le clapet chargé est fermé et le fluide sous pression enclos dans la canalisation aval associée audit élément mâle s'échappe à l'extérieur, tandis qu'une seconde manoeuvre axiale exercée sur le fourreau en sens inverse du précédent assure la commande de l'organe annulaire de sécurité et la libération totale de l'élément mâle.

2. Raccord rapide suivant la revendication 1, caractérisé en ce que l'organe annulaire de sécurité (8) est monté à coulissement axial entre l'organe annulaire de verrouillage (9) et le corps tubulaire (1-2-3) de l'élément femelle (A), les griffes (8a, 9a) des deux organes étant engagées dans des lumières (3b, 3c) pratiquées dans le corps précité de manière à faire saillie par leur extrémité libre à l'intérieur de celui-ci pour coopérer avec la dépression annulaire (13b).

3. Raccord rapide suivant la revendication 2, caractérisé en ce que le premier déplacement axial du fourreau (10-11) amène un alésage axial (11c) de celui-ci au niveau des extrémités libres des griffes (8a) de l'organe de sécurité (8) en interdisant ainsi l'ouverture desdites extrémités qui restent engagées dans la dépression annulaire (13b) jusqu'à la seconde manoeuvre axiale exercée sur ledit fourreau.

## Patentansprüche

1. Sicherheitsschnellkupplung für lösbare Leitungsverbindungen von der Art, bei der der Verriegelungsmechanismus, der das Steckerelement (B) axial immobilisiert, sobald dieses beim Hineinstecken in das Buchsenelement (A) die Öffnung des in dieses Buchsenelement (A) montierten federbelasteten Ventils (6) bewirkt hat, einerseits ein ringförmiges Organ (9) umfasst, versehen mit Klauen (9a), die sich unter der Wirkung von elastischen Einrichtungen (12) in eine ringförmige Vertiefung (13b) des Körpers (13) des Steckerelements setzen können, und andererseits eine Betätigungshülse (10-11) umfasst, deren Axialverschiebung das Entfernen der genannten Klauen aus der Vertiefung und die Freigabe des Steckerelements bewirkt, **dadurch gekennzeichnet,**
dass das Buchsenelement außerdem ein ringförmiges Sicherheitsorgan mit Längsklauen (8-8a) umfasst, das nach einer ersten Axialverschiebung der Hülse das Steckerelement in einer Zwischenstellung immobilisiert, in der das federbelastete Ventil geschlossen ist und das in der zu dem Steckerelement gehörenden stromabwärtsseitigen Leitung eingeschlossene Druckfluid nach außen entweicht, während eine zweite Axialverschiebung der Hülse in zu der vorhergehenden entgegengesetzter Richtung die Betätigung des ringförmigen Sicherheitsorgans und die totale Freigabe des Steckerelements bewirkt.

2. Schnellkupplung nach Anspruch 1, dadurch gekennzeichnet, dass das ringförmige Sicherheitsorgan (8) axial gleitend zwischen das ringförmige Verriegelungsorgan (9) und den röhrenartigen Körper (1-2-3) des Buchsenelements (A) montiert ist, wobei die Klauen (8a, 9a) der beiden Organe in Öffnungen (3b, 3c) sitzen, die in dem vorerwähnten Körper vorgesehen sind, und mit ihren freien Enden auf dessen Innenseite vorstehen, um dort mit der ringförmigen Vertiefung (13b) zusammenzuwirken.

3. Schnellkupplung nach Anspruch 2, dadurch gekennzeichnet, dass die erste Axialverschiebung der Hülse (10-11) eine Axialbohrung (11c) von dieser auf die Höhe der freien Enden der Klauen (8a) des Sicherheitsorgans (8) bringt, wobei dadurch die Öffnung der genannten Enden verhindert wird, die bis zur zweiten Axialbetätigung der genannten Hülse in die ringförmige Vertiefung (13b) eingerastet bleiben.

## Claims

1. A rapid action safety coupling for detachable connection of pipes, of the type in which the locking mechanism, which axially immobilises the male member (B) once insertion thereof into the female member (A) has caused opening of the loaded clack valve (6) mounted in said female member (A), comprises, on the one hand, an annular member (9) provided with longitudinal claws (9a) capable of engaging, under the action of resilient means, in an annular depression (13b) in the body (13) of the male member and, on the other hand, an operating sheath (10-11), the axial displacement of which causes extraction of said claws from the depression and release of the male member, characterised in that the female member additionally comprises an annular safety member with longitudinal claws (8-8a) which, coming into play after a first axial manoeuvre exerted on the sheath, immobilises the male member in an intermediate position, in which the loaded clack valve is closed and the pressurised fluid enclosed in the downstream pipe associated with said male member escapes to the outside, while a second axial manoeuvre exerted on the sheath in the reverse direction from the first ensures control of the annular safety member and total release of the male member.

2. A rapid action coupling according to claim 1,
characterised in that the annular safety member (8) is mounted for axial sliding between the annular locking member (9) and the tubular body (1-2-3) of the female member (A), the claws (8a, 9a) of the two members engaging in slots (3b, 3c) formed in the above-stated body in such a way that their free ends project inside the latter to cooperate with the annular depression (13b).

3. A rapid action coupling according to claim 2,
characterised in that the first axial displacement of the sheath (10-11) brings an axial bore (11c) therein to the level of the free ends of the claws (8a) of the safety member (8), thereby preventing opening of said ends, which remain engaged in the annular depression (13b) until the second axial manoeuvre is exerted on said sheath.
